**Europäisches Patentamt**

**European Patent Office**

**Office européen des brevets**

(11) Veröffentlichungsnummer: **0 180 710**
**B1**

(12) **EUROPÄISCHE PATENTSCHRIFT**

(45) Veröffentlichungstag der Patentschrift:
20.12.89

(21) Anmeldenummer: 85107617.4

(22) Anmeldetag: 20.06.85

(51) Int. Cl.⁴: **B 65 G 13/071**

(54) **Transportvorrichtung für Stückgüter oder dergleichen.**

(30) Priorität: 02.11.84  DE 3439966

(43) Veröffentlichungstag der Anmeldung:
14.05.86 Patentblatt 86/20

(45) Bekanntmachung des Hinweises auf die Patenterteilung:
20.12.89 Patentblatt 89/51

(84) Benannte Vertragsstaaten:
AT BE CH DE FR GB IT LI LU NL SE

(56) Entgegenhaltungen:
CH-A- 390 789
DE-A- 2 335 874
DE-B- 1 297 022
DE-B- 2 261 936
GB-A- 1 164 714
GB-A- 1 200 725
GB-A- 1 366 206

(73) Patentinhaber: **Lödige Fördertechnik Gesellschaft mit beschränkter Haftung, Friedrich-Böhlen-Strasse, D-3530 Warburg 2 (DE)**

(72) Erfinder: **Lödige, Rudolf, Dr., Driburger Strasse 28, D-4790 Paderborn (DE)**
Erfinder: **Leonhard, Bernhard, Trift 21, D-3530 Warburg-Scherfede (DE)**
Erfinder: **Stille, Volker, Niedensteiner Strasse 5, D-3507 Baunatal (DE)**

(74) Vertreter: **Elbertzhagen, Otto, Patentanwälte Thielking & Elbertzhagen Gadderbaumer Strasse 20, D-4800 Bielefeld 1 (DE)**

ACTORUM AG

**Beschreibung**

Die Erfindung bezieht sich auf eine Transportvorrichtung für Stückgüter oder dergleichen der im Gattungsbegriff des Patentanspruchs 1 bezeichneten Art.

Eine solche Transportvorrichtung ist aus der DE-AS 2 261 936 bekannt; sie ist dort jedoch als Förderwegweiche zur Übergabe von Stückgut von einem ersten Förderer auf zumindest einen zweiten Förderer, der in andere Richtung als der erste Förderer verläuft, ausgebildet. Bei solchen Förderwegweichen kommt es darauf an, die Förderrichtung der Stückgüter ändern zu können, wozu es komplizierter Antriebseinrichtungen für die Wälzkörper bedarf. Dazu bestehend die einzelnen Antriebseinrichtungen aus parallel zur Förderfläche drehbaren Antriebstellern, auf denen sich jeweils einer der Wälzkörper exzentrisch abstützt, wobei sämtliche Antriebsteller an einer gemeinsamen Lagerplatte drehbar angebracht sind, während die Platte mit den Durchtrittsöffnungen als Halter für die Wälzkörper ortsfest angeordnet ist. Durch Verstellung der Lagerplatte gegenüber der die Kugeln halternden oberen Platte kann die Förderrichtung der Wälzkörper in weiten Bereichen variiert werden.

Für linear fördernde Transportvorrichtungen ist die bekannte Förderwegweiche zu aufwendig. Sie wird daher nur als kurzbauendes Übergabedeck verwendet.

Für linear fördernde Transportvorrichtungen hat man bislang zwei andere Systeme eingesetzt. Zum einen verwendet man Rollenbahnen, die unterhalb einer ortsfest angeordneten Oberplatte mit Durchtrittsöffnungen für die einzelnen Rollen höhenverfahrbar angeordnet sind. In abgesenktem Zustand der Rollenbahn kann die Oberplatte auf ihrer Oberseite mit Fahrzeugen, wie Gabelstaplern, Handhubwagen oder dergleichen, befahren werden, ohne daß durch punktuelle Belastung durch die Fahrzeugräder die einzelnen Rollen der Rollenbahnen überlastet werden könnten. Allerdings ist bei diesem Transportsystem der Antrieb der einzelnen auf Achsen sitzenden Rollen umständlich und wird zusätzlich durch die Hubeinrichtung erschwert. Ferner sind die im abgesenkten Zustand der Rollenbahn offenen Oberflächenausschnitte in der Oberplatte eine Gefahrenstelle, zudem können Schmutz und größere Partikel in diese Öffnungen bei abgesenkten Rollen gelangen und die Funktion der Hubeinrichtung wie auch der Rollen selbst beeinträchtigen.

Ferner kennt man als lineare Transportsysteme der in Rede stehenden Art sogenannte Ziehteppiche, die von Umlenktrommeln angetrieben über eine Gleitfläche gezogen werden. Zwischen dem Teppich und der Gleitfläche treten sehr hohe Reibkräfte auf, die hohe Antriebsleistungen erfordern und für einen schnellen Verschleiß des Teppichmaterials verantwortlich sind. Außerdem hält das Teppichmaterial partielle Belastungen insbesondere durch scharfe Kanten an den Stückgütern nicht aus.

Der Erfindung liegt daher die Aufgabe zugrunde, eine Transportvorrichtung der gattungsgemäßen Art als lineare Fördervorrichtung auszubilden, die einfache, gegen schwere Belastungen unempfindliche Antriebseinrichtungen für Wälzkörper hat und folglich auch von Fahrzeugen ohne Absenkung der Wälzkörper überfahren werden kann.

Diese Aufgabe wird bei einer Transportvorrichtung der gattungsgemäßen Art nach der Erfindung dadurch gelöst, daß die Antriebseinrichtungen für die Wälzkörper aus zylindrischen Wellen bestehen, die jeweils mittig unter den Reihen kugeliger Wälzkörper sowie parallel dazu gelagert sind.

Der besondere Vorteil einer erfindungsgemäßen Transportvorrichtung liegt darin, daß die auf den Wellen aufgelagerten Wälzkörper hohe Vertikalkräfte aufnehmen und über die unterseitigen Antriebswellen ableiten können. Im Überfahrbetrieb sind lediglich die Wälzkörper stillgesetzt und es entstehen keine störenden Ausschnitte in der Plattenoberseite, in die Schmutz und anderweitig störende Partikel eindringen könnten. Über den Reibschluß mit den Antriebswellen können die Wälzkörper im Stillstand blockiert werden, so daß keine Ausrutscheffekte wie bei Kugelförderbahnen mit nicht angetriebenen Kugeln auftreten.

In bevorzugter Ausführung werden bei der erfindungsgemäßen Transportvorrichtung als Wälzkörper Kugeln eingesetzt, die besonders günstige Überfahreigenschaften haben.

Die Lagerung der die Wälzkörper tragenden Wellen kann an besonders versteiften Querträgern erfolgen, und die Wellen können bei entsprechender Zwischenunterstützung über die gesamte Länge einer Kugelreihe quer zur Transportrichtung reichen. Der Antrieb der Wellen erfolgt zweckmäßig über außen liegende Antriebsräder, wie Kettenscheiben oder Zahnriemenräder, um einerseits einen synchronen Antrieb der Wälzkörper sicherzustellen und die Verbindung zu einem zentralen Antriebsmotor zu ermöglichen.

Weitere vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:

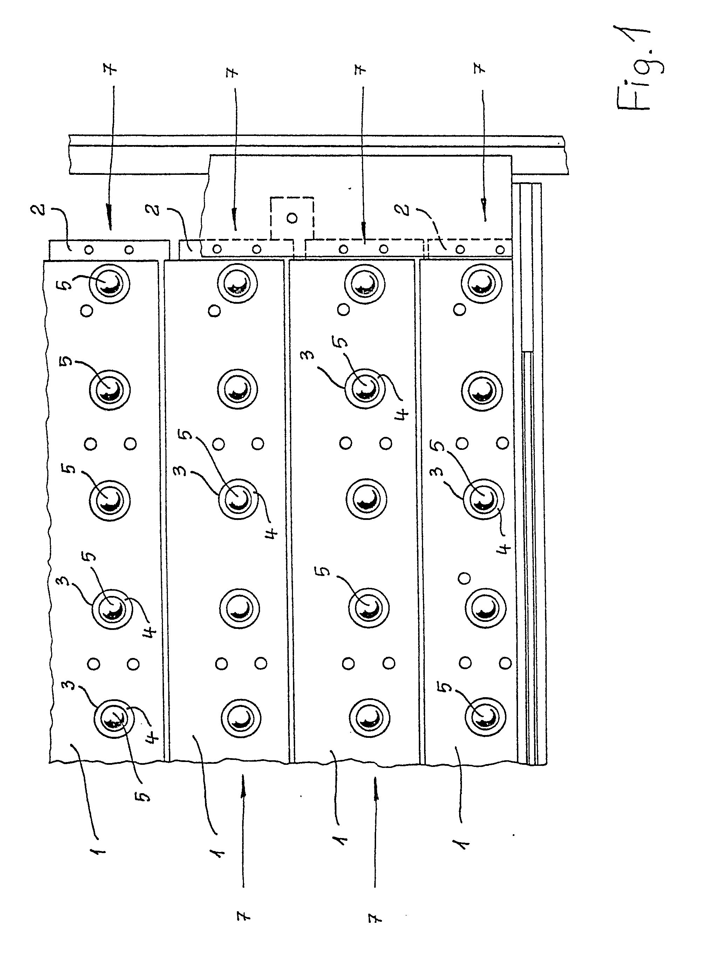

Fig. 1 die Draufsicht auf einen Ausschnitt einer Transportvorrichtung für die Förderung von Stückgütern auf diese unterstützenden Kugeln,

Fig. 2 einen Längsschnitt durch den Teilbereich der Transportvorrichtung nach Fig. 1 und

Fig. 3 einen Querschnitt durch diesen Bereich der Transportvorrichtung.

Die Zeichnung zeigt im einzelnen plattenförmige Segmente 1, die quer zur Förderrichtung der Transportvorrichtung angeordnet sind. Unterseitig sind die Segmente 1 mit in Querschnitt U-förmigen Trägern 2 fest verbunden, um eine ausreichende Biegesteifigkeit der Segmente 1 zu erzielen. Die Oberseiten 6 der Segmente 1 schließen bündig aneinander an, um eine geschlossene, mit Fahrzeugen überfahrbare Oberseite der Transportvorrichtung zu erhalten. Anders als in der Zeichnung dargestellt, kann anstelle der einzelnen, versteiften Plattensegmente 1 auch eine durchgehende Platte verwendet werden.

In die Segmente 1 und die Träger 2 sind vertikal von oben nach unten durchgehende Löcher 3 eingearbeitet, die sich jeweils zu einer quer zur Transportrichtung verlaufenden, geradlinigen Reihe ergänzen. In jedes der Löcher 3 ist eine Führungshülse 4 eingesetzt, die mit der Oberseite 6 des Segments 1 bündig abschließt. Die Führungshülsen 4 nehmen jeweils eine Kugel 5 auf, die mit ihrer jeweils oben liegenden Seite über die Oberseite 6 der Plattensegmente 1 vorsteht.

Entsprechend der Konfiguration der Durchtrittsöffnungen 3 bilden auch die Kugeln 5 quer zur Transportrichtung angeordnete Reihen 7, die beim dargestellten Ausführungsbeispiel parallel zueinander liegen, grundsätzlich aber auch winklig zueinander angeordnet werden können.

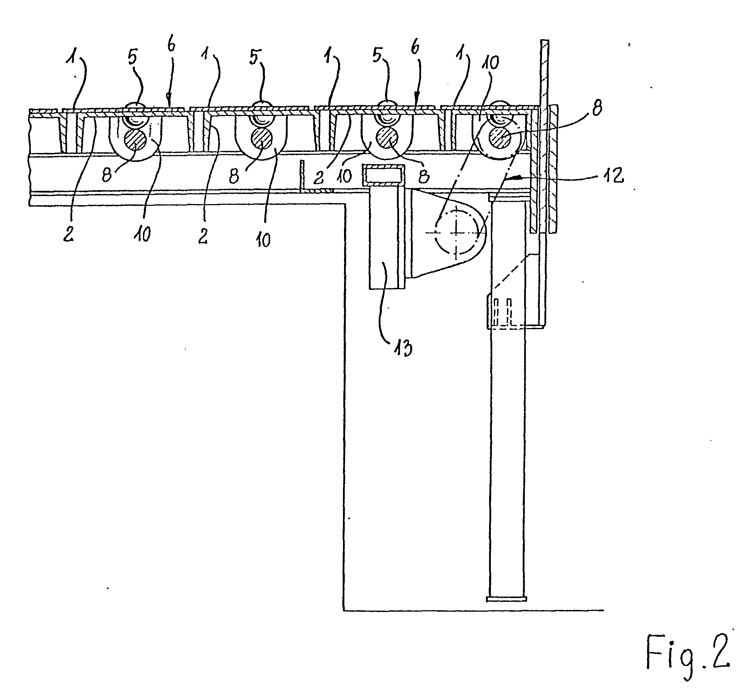

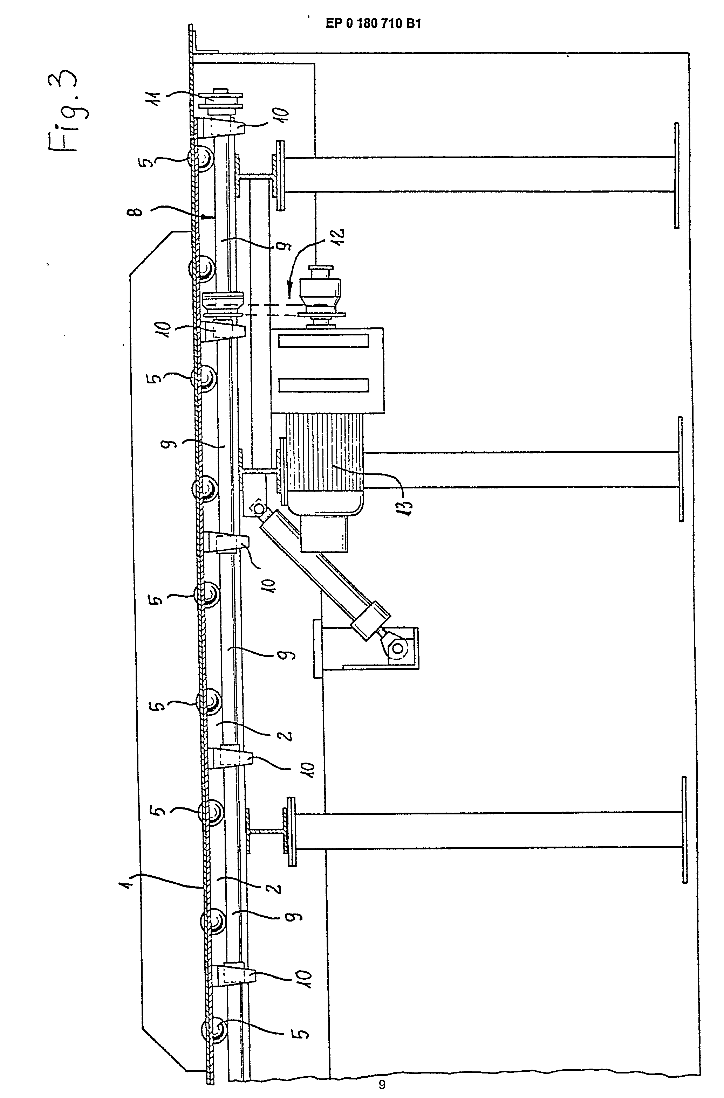

Wie insbesondere die Figuren 2 und 3 veranschaulichen, sind alle Kugeln 5 einer Kugelreihe 7 auf einer zylindrischen Welle 8 aufgelagert, die unterhalb der Segmente 1 zwischen den U-Flanschen der Querträger 2 angeordnet ist. Die Achse der Welle 8 liegt zur Verbindungslinie der Mittelpunkte der Kugeln 5 einer Reihe 7 parallel, weswegen infolge der geradlinigen Ausrichtung der Kugelreihen 7 die Mittelpunkte der Kugeln 5 in der durch die Achse der zugehörigen Welle 8 hindurchgehenden Vertikalebene liegen. Die Hülsen 3 sind jeweils mit ihren Achsen rechtwinklig auf die Achse der Welle 8 ausgerichtet und halten die einzelnen Kugeln 5 auch bei Rotation der Welle 8 in der mittigen Ausrichtung zu dieser fest.

Jede der Wellen 8 ist in einzelne, zweckmäßig gleich lange Abschnitte 9 unterteilt, zwischen denen sich jeweils ein Lagerelement 10 befindet, das mit dem zugehörigen Querträger 2 fest verbunden ist. Auf jedem der Wellenabschnitte 9 sind jeweils zwei Kugeln 5 aufgelagert, wobei der Abstand der einzelnen Kugeln 5 zu dem jeweils benachbarten Lagerelement 10 gleich dem halben Abstand der benachbarten Kugeln 5 untereinander ist. Da die Kugeln 5 sämtliche auftretenden Vertikalkräfte nur auf die Welle 8 übertragen können, läßt sich damit eine optimale Lastverteilung auf der Welle 8 erreichen.

An einer Längsseite der Transportvorrichtung sind auf die über die jeweiligen endseitigen Lagerelemente 10 hinaus verlängerten Wellenenden Antriebsräder 11, wie Kettenräder oder Zahnriemenscheiben, aufgesetzt, und alle oder zumindest mehrere der Wellen 8 untereinander durch entsprechende Ketten- oder Zahnriementriebe schlupffrei miteinander verbunden. Eine dieser Wellen 8 ist über einen weiteren Zwischentrieb 12 mit einem unterhalb im Gestell der Vorrichtung angeordneten, zentralen Antriebsmotor 13 verbunden.

## Patentansprüche

1. Transportvorrichtung für Stückgüter oder dergleichen mit die Stückgüter unmittelbar unterstützenden Wälzkörpern (5), die unterhalb einer Platte oder plattenartig sich ergänzenden Segmenten (1) auf tragenden, wälzenden Antriebseinrichtungen angeordnet und in Durchtrittsöffnungen (3) der Platte (1) geführt sind, wobei die Wälzkörper (5) mit ihrer jeweils oben liegenden Seite über die Plattenoberseite (6) vorstehen und in geradlinigen Reihen (7) quer zur Transporteinrichtung angeordnet sind, dadurch gekennzeichnet, daß die Antriebseinrichtungen aus zylindrischen Wellen (8) bestehen, die jeweils mittig unter den Reihen (7) kugeliger Wälzkörper (5) sowie parallel dazu gelagert sind.

2. Transportvorrichtung nach Anspruch 1, dadurch gekennzeichnet, daß die Wälzkörper (5) Kugeln sind, wobei die Kugeln einer Reihe (7) mit ihren Mittelpunkten in der durch die Achse der zugehörigen Welle (8) hindurchgehenden Vertikalebene liegen.

3. Transportvorrichtung nach Anspruch 2, dadurch gekennzeichnet, daß in die Durchtrittsöffnungen (3) der Platte oder Segmente (1) mit der Platten- oder Segmentoberseite bündig abschließende Hülsen (4) zur Halterung der Kugeln (5) eingesetzt sind, die mit ihren Längsachsen senkrecht zu der Achse der zugehörigen Welle (8) angeordnet sind.

4. Transportvorrichtung nach einem der Ansprüche 1 bis 3, dadurch gekennzeichnet, daß die Wellen (8) jeweils über die gesamte Länge der zugehörigen Wälzkörperreihe (7) reichen und in in Achsrichtung hintereinander liegenden Lagerelementen (10) mehrfach gelagert sind.

5. Transportvorrichtung nach Anspruch 4, dadurch gekennzeichnet, daß die Lagerelemente (10) unterseitig an steifen Querträgern (2) angeordnet sind, welche mit ihren Oberseiten die Segmente (1) bilden oder auf die die Segmente (1) aufgesetzt sind, wobei die Wälzkörper (5) durch Öffnungen der Querträger (2) hindurchragen.

6. Transportvorrichtung nach Anspruch 4 oder 5, dadurch gekennzeichnet, daß auf den zwischen den Lagerelementen (10) liegenden Wellenabschnitten (9) jeweils zwei Wälzkörper (5) aufgelagert sind.

7. Transportvorrichtung nach einem der Ansprüche 1 bis 5, dadurch gekennzeichnet, daß zumindest mehrere der Wellen (8) untereinander über außen angesetzte Antriebsräder (11), schlupffrei und andererseits mit einem zentralen Antriebsmotor (13) verbunden sind.

## Claims

1. Conveying apparatus for individual articles or the like having rolling members (5) which directly support the individual articles and are arranged underneath a plate or segments (1) combining in the form of a plate on supporting, rolling driving devices and are guided in passage openings (3) in the plate (1), the rolling members (5) protruding by their upper side in each case above the upper side (6) of the plate and being arranged in rectilinear rows (7) transversely to the conveying direction, characterized in that the driving devices comprise cylindrical shafts (8) which are in each case supported centrally underneath the rows (7) of spherical rolling members (5) and parallel thereto.

2. Conveying apparatus according to Claim 1, characterized in that the rolling members (5) are balls, the centres of the balls of one row (7) lying in the vertical plane passing through the axis of the associated shaft (8).

3. Conveying apparatus according to Claim 2, characterized in that sleeves (4) for holding the balls (5) are inserted into the passage openings (3) in the plate or segments (1), said sleeves ending flush with the upper side of the plate or segments and being arranged with their longitudinal axes perpendicular to the axis of the associated shaft (8).

4. Conveying apparatus according to one of Claims 1 to 3, characterized in that the shafts (8) in each case extend over the entire length of the associated row (7) of rolling members and are supported at a multiplicity of points in bearing elements (10) lying one behind the other in the axial direction.

5. Conveying apparatus according to Claim 4, characterized in that the bearing elements (10) are arranged at the bottom face of rigid transverse supports (2) which with their top sides from the segments (1) or on which the segments (1) are mounted, the rolling members (5) protruding through openings in the transverse supports (2).

6. Conveying apparatus according to Claim 4 or 5, characterized in that two rolling members (5) are in each case supported on the shaft portions (9) situated between the bearing elements (10).

7. Conveying apparatus according to one of Claims 1 to 5, characterized in that at least some of the shafts (8) are connected to one another in slip-free fashion via drive wheels (11) mounted at the outside and connected on the other hand to a central drive motor (13).

**Revendications**

1. Dispositif de transport pour colis de détail ou marchandises analogues comportant des organes de roulement (5) supportant directement les colis de détail, qui sont montés, en dessous d'une plaque ou de segments se complétant en une plaque (1), sur des dispositifs d'entraînement roulants porteurs et sont guidés dans des ouvertures de traversée (3) de la plaque (1), les organes de roulement (5) faisant chacun saillie, par leur côté supérieur, au-dessus de la face supérieure (6) de la plaque et étant disposés en des files rectilignes (7) perpendiculaires à la direction de transport, caractérisé en ce que les dispositifs d'entraînement sont constitués d'arbres cylindriques (8) qui sont chaque fois montés à tourillonnement au milieu en dessous d'une file (7) d'organes de roulement sphériques (5) et parallèlement à celle-ci.

2. Dispositif de transport suivant la revendication 1, caractérisé en ce que les organes de roulement (5) sont des billes, les billes d'une file (7) étant disposées par leurs centres dans le plan vertical passant par l'axe de l'arbre (8) associé.

3. Dispositif de transport suivant la revendication 2, caractérisé en ce que, dans les ouvertures de traversée (3) de la plaque ou des segments (1), sont insérées des douilles (4) qui se terminent au ras de la face supérieure de la plaque ou des segments et sont destinées à maintenir les billes (5), ces douilles étant disposées de manière que leurs axes longitudinaux soient perpendiculaires à l'axe de l'arbre (8) associé.

4. Dispositif de transport suivant l'une quelconque des revendications 1 à 3, caractérisé en ce que les arbres (8) s'étendent chacun sur toute la longueur de la file (7) d'organes de roulement associée et tourillonnent en plusieurs endroits dans des éléments-palliers (10) disposés les uns derrière les autres dans le sens axial.

5. Dispositif de transport suivant la revendication 4, caractérisé en ce que les éléments-paliers (10) sont montés sur la face inférieure de traverses rigides (2) qui, par leur face supérieure, forment les segments (1) ou sur lesquels les segments (1) sont posés, les organes de roulement (5) traversant des ouvertures des traverses (2).

6. Dispositif de transport suivant la revendication 4 ou 5, caractérisé en ce que deux organes de roulement (5) sont chaque fois montés à rotation sur les segments d'arbre (9) situés entre les éléments-paliers (10).

7. Dispositif de transport suivant l'une quelconque des revendications 1 à 5, caractérisé en ce qu'au moins plusieurs des arbres (8) sont reliés l'un à l'autre sans glissement par l'intermédiaire de roues d'entraînement (11) montées à l'extérieur et sont reliés par ailleurs à un moteur d'entraînement central (13).

Fig.1

Fig.2

EP 0 180 710 B1

Fig.3

EP 0 180 710 B1